(19) Europäisches Patentamt

European Patent Office

Office européen des brevets

(11) **EP 1 710 749 A1**

(12) **EUROPÄISCHE PATENTANMELDUNG**

(43) Veröffentlichungstag:
**11.10.2006 Patentblatt 2006/41**

(51) Int Cl.:
*G06T 7/00* (2006.01)   *G01C 25/00* (2006.01)

(21) Anmeldenummer: **06006089.4**

(22) Anmeldetag: **24.03.2006**

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(30) Priorität: **01.04.2005 DE 102005014954**

(71) Anmelder: **AUDI AG**
**85045 Ingolstadt (DE)**

(72) Erfinder: **Warnecke, Matthias**
**85049 Ingolstadt (DE)**

(74) Vertreter: **Thielmann, Frank**
**AUDI AG,**
**Patentabteilung I/EX**
**85045 Ingolstadt (DE)**

(54)   **Korrektur der Messfehler des Gierwinkels bei Sensoren zur Fahrspurerkennung**

(57)   Verfahren zur Bestimmung einer Abweichung eines gemessenen Gierwinkels von einem realen Gierwinkel ($\psi$) anhand der von einer Bildaufnahmeeinrichtung (5) zur Fahrspurerfassung gelieferten Daten in einem Kraftfahrzeug (1), wobei eine Recheneinheit (6) aus den Daten zu zwei aufeinander folgenden Zeitpunkten jeweils einen Abstand (Y) eines ausgezeichneten Punktes oder einer ausgezeichneten Achse des Kraftfahrzeuges zu einer Fahrbahnbegrenzung (3, 4) und den gemessenen Gierwinkel bestimmt; die Recheneinheit (6) aus den Abständen und einer ihr gegebenen Kraftfahrzeuggeschwindigkeitsinformation einen realen Gierwinkel und die Abweichung aus einer Differenz aus dem gemessenen Gierwinkel und dem realen Gierwinkel bestimmt.

FIG. 1

**Beschreibung**

Die Erfindung betrifft ein Verfahren zur Bestimmung einer Abweichung eines gemessenen Gierwinkels von einem realen Gierwinkel anhand der von einer Bildaufnahmeeinrichtung zur Fahrspurerfassung gelieferten Daten in einem Kraftfahrzeug.

Bei modernen Systemen zur Fahrspurerfassung spielt die Bestimmung des Gierwinkels eine große Rolle. Diese Information wird insbesondere in Fahrerassistenzsystemen verwendet, die den Fahrer eines Kraftfahrzeugs vor dem Verlassen der Fahrspur warnen. Der Gierwinkel im Sinne dieser Schrift ist der Winkel, den die dynamische Fahrachse, die die momentane Bewegungsrichtung des Fahrzeugs beschreibt, mit der Fahrbahntangente bildet. Der Gierwinkel im Sinne dieser Erfindung kann auch als relativer Gierwinkel oder Gierwinkelfehler bezeichnet werden.

Zwischen dem aus der Bildaufnahmeeinrichtung bestimmten, gemessenen Gierwinkel und dem realen Wert des Gierwinkels existiert mitunter eine Abweichung. Die dafür verantwortlichen Effekte beruhen auf einer Abweichung der optischen Achse von der Fahrzeuglängsachse sowie auf dem statistischen Rauschen. Für den erstgenannten Effekt, der eine systematische Fehlerquelle darstellt, sind Einbaumängel und/oder eine Verstellung der Justierung während des Betriebes des Kraftfahrzeuges verantwortlich. Daher muss eine Kalibrierung vorgenommen werden, um den systematischen Fehler im Gierwinkel möglichst gering zu halten.

Eine Kalibrierung während der Fertigung stellt nur eine sehr grobe Korrektur dar, da diese vor dem ordnungsgemäßen Betrieb des Kraftfahrzeuges vorgenommen wird. Eine systematische Abweichung der Fahrzeuglängsachse von der optischen Achse der Bildaufnahmeeinrichtung durch eine Verstellung während der Fahrt kann somit nicht korrigiert werden.

Deswegen wurde vorgeschlagen, eine Online-Kalibrierung während der Fahrt vorzunehmen. Liegt nämlich ein systematischer Fehler in der Messung des Gierwinkels vor, so entsteht der Eindruck, dass das Kraftfahrzeug nach einer gewissen Zeit seine Fahrspur verlassen müsse. Geht man davon aus, dass das Fahrzeug über einige Zeit gemittelt seine Spur nicht verlässt, so lässt sich eine Korrektur berechnen. Diese Korrektur muss jedoch über eine längere Zeit bestimmt werden, um einen systematischen Fehler im Fahrverhalten des Fahrers auszuschließen. Ein systematischer Fehler aus einer Drift wird auch nicht korrekt wahrgenommen. Diese Methode ist nachteilig, da sie neue systematische Fehler aufwirft und sehr lange Kalibrierungsmessreihen erfordert.

Der Erfindung liegt daher die Aufgabe zugrunde, ein Verfahren anzugeben, das eine schnellere und exaktere Kalibrierung des Gierwinkels während des Betriebs des Kraftfahrzeugs ermöglicht.

Zur Lösung dieses Problems ist erfindungsgemäß bei einem Verfahren zur Bestimmung einer Abweichung eines gemessenen Gierwinkels von einem realen Gierwinkel anhand der von einer Bildaufnahmeeinrichtung zur Fahrspurerfassung gelieferten Daten in einem Kraftfahrzeug vorgesehen, dass eine Recheneinheit aus den Daten zu zwei aufeinander folgenden Zeitpunkten jeweils einen Abstand eines ausgezeichneten Punktes oder einer ausgezeichneten Achse des Kraftfahrzeugs zu einer Fahrbahnbegrenzung und den gemessenen Gierwinkel bestimmt und die Recheneinheit aus den Abständen und einer ihr gegebenen Kraftfahrzeuggeschwindigkeitsinformation einen realen Gierwinkel und die Abweichung aus einer Differenz aus dem gemessenen Gierwinkel und dem realen Gierwinkel bestimmt.

Der Vorteil dieses Verfahrens ist die Bestimmung eines realen Gierwinkels aus einer bekannten Beziehung zu dem bei der Fahrspurerfassung ohnehin gemessenen Abstand eines ausgezeichneten Punktes oder einer ausgezeichneten Achse des Kraftfahrzeuges zu einer Fahrbahnbegrenzung, häufig auch als Ablage bezeichnet. Die Lage der Fahrbahnbegrenzung wird dabei durch Bildverarbeitung aus den Daten der Bildaufnahmeeinrichtung bestimmt. Dieser Abstand ist unabhängig von der Verschiebung der optischen Achse zur Fahrzeuglängsachse und dem Fahrverhalten des Fahrers bzw. einer Drift. Systematische Fehler werden also vermieden.

Vorteilhafterweise wird noch eine gemittelte Abweichung aus mehreren zeitlich aufeinander folgend bestimmten Abweichungen ermittelt. Damit wird neben den systematischen Fehlern auch das statistische Rauschen reduziert. Das Verfahren führt so schneller zu stabilen Ergebnissen als die bisher verwendeten Varianten. Während die Reproduzierbarkeit im bisher verwendeten Online-Kalibrierungsverfahren aufgrund des Fahrverhaltens des Fahrers häufig nicht gegeben war, liefert das erfindungsgemäße Verfahren reproduzierbare Ergebnisse, da es das Fahrverhalten praktisch herausrechnet.

Von ganz besonderem Vorteil kann zusätzlich aus den mehreren zeitlich aufeinander folgend bestimmten Abweichungen die Summe der einzelnen Abweichungen und die Summe der Quadrate der einzelnen Abweichungen sowie die Zahl der mehreren zeitlich aufeinander folgend bestimmten Abweichungen bestimmt werden und daraus die Standardabweichung ermittelt werden. Die Standardabweichung des Mittelwertes ist ein direktes Maß für die aktuell erreichte Genauigkeit der Kalibrierung. Zu ihrer Berechnung wird nur sehr wenig Speicher benötigt. Es kann nun beispielsweise vorgesehen sein, dass so lange Werte der Abweichungen aufgenommen werden, bis die Standardabweichung unter einen vorbestimmten Wert sinkt. So kann eine Genauigkeit der Kalibrierung vorgegeben werden.

Weiterhin ist erfindungsgemäß bei einem Kraftfahrzeug, umfassend wenigstens ein Fahrerassistenzsystem sowie eine diesem zugeordnete Bildaufnahmeeinrichtung zur Fahrspurerfassung und eine diesem zugeordnete Recheneinheit zur Ermittlung eines Gierwinkels, vorgesehen, dass durch die Recheneinheit aus den Daten der Bildaufnahmevorrichtung zu zwei aufeinander folgenden Zeitpunkten jeweils ein Abstand eines ausgezeichneten Punktes oder einer ausgezeichneten Achse des Kraftfahrzeugs zu einer Fahrbahnbegrenzung und ein gemessener Gierwinkel bestimmbar sind und durch die Recheneinheit aus den Abständen und einer ihr gegebenen Kraftfahrzeuggeschwindigkeitsinformation ein realer Gierwinkel sowie eine Abweichung des gemessenen Gierwinkels von dem realen Gierwinkel aus der Differenz aus dem gemessenen Gierwinkel und dem realen Gierwinkel bestimmbar sind.

Von besonderem Vorteil ist es, wenn die Bildaufnahmevorrichtung eine Videokamera und/oder eine Infrarotkamera und/oder ein Nachtsichtgerät umfasst. Der genannte Abstand und der gemessene Gierwinkel können durch Analyse der aufgenommenen Bilder schnell und einfach gewonnen werden.

Weitere Vorteile, Merkmale und Einzelheiten der Erfindung ergeben sich aus dem im folgenden beschriebenen Ausführungsbeispiel sowie anhand der Zeichnungen. Dabei zeigen:

Fig. 1    ein erfindungsgemäßes Kraftfahrzeug, das sich auf einer Fahrbahn bewegt, und

Fig. 2    eine geometrische Skizze, die die bei der erfindungsgemäßen Bestimmung des realen Gierwinkels genutzten Größen zeigt.

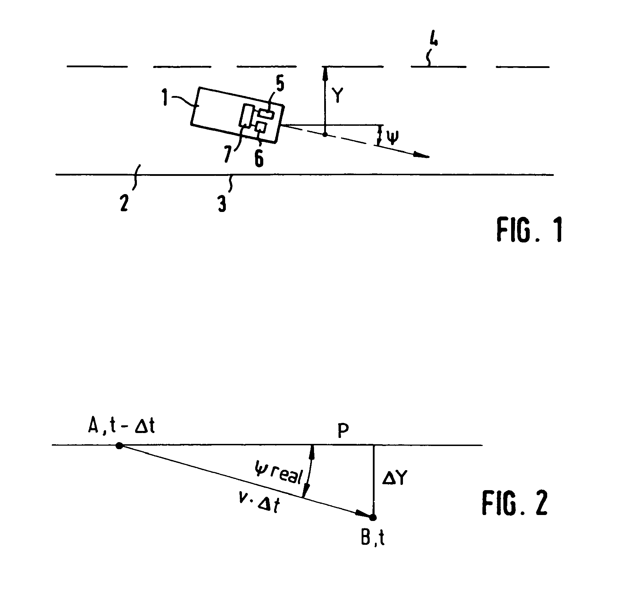

Fig. 1 zeigt ein erfindungsgemäßes Kraftfahrzeug 1, das sich auf einer Fahrspur 2 bewegt. Die Fahrspur 2 bestimmt sich hierbei durch die Fahrbahnbegrenzungen 3 und 4. Einem Fahrerassistenzsystem 7 sind eine Bildaufnahmevorrichtung 5 und eine Recheneinheit 6 zugeordnet. Die Bildaufnahmevorrichtung 5 nimmt ein Bild des vor dem Kraftfahrzeug befindlichen Fahrspurbereiches auf. Die Recheneinheit 6 bestimmt zu jedem Zeitpunkt aus dem Bild den Gierwinkel $\psi$, also den Winkel zwischen dynamischer Fahrachse, die mit der Fahrzeuglängsachse zusammenfällt, und Fahrbahntangente, und die Ablage Y. Dabei werden durch eine spezielle Mustererkennung zunächst die relativen Positionen der im aufgenommenen Bild sichtbaren Fahrbahnränder 3 und 4 zum Kraftfahrzeug bestimmt. Der gemessene Gierwinkel ergibt sich durch die Projektion einer die Fahrspur beschreibenden Funktion ins Bild, wobei die Abbildungsfehler minimiert werden. Der Abstand eines ausgezeichneten Punktes oder einer ausgezeichneten Achse des Kraftfahrzeuges zu der Fahrbahnbegrenzung 4, im Folgenden Ablage Y genannt, kann beispielsweise durch die Projektion der optischen Achse in das aufgenommene Bild bestimmt werden.

In Fig. 2 ist die Geometrie während einer solchen Messung dargestellt. Das Kraftfahrzeug 1 befindet sich zu einem Zeitpunkt t-$\Delta$t an einem Punkt A auf der Fahrspur 2. Innerhalb eines Zeitintervalls $\Delta$t bewegt es sich mit der Geschwindigkeit v um die Strecke v · $\Delta$t zu einem neuen Punkt auf der Fahrspur 2, nämlich B, den es zur Zeit t erreicht. Die Gerade P stellt eine Parallele zu den Fahrbahnbegrenzungen 3 und 4 dar, die Fahrbahntangente. Der Winkel, den die Gerade P und die vom Kraftfahrzeug 1 zurückgelegte Strecke v · $\Delta$t bilden, ist genau der reale Gierwinkel $\psi_{real}$. Die Länge der Gegenkathete in einem rechtwinkligen Dreieck ist nun aber genau die Änderung der Ablage $\Delta$Y. Die Ablage Y zum Zeitpunkt t ergibt sich als die Summe der Ablage zum Zeitpunkt t - $\Delta$t und $\Delta$Y,

$$Y(t) = Y(t - \Delta t) + \Delta Y. \qquad\qquad (i)$$

Aus der Bestimmungsgleichung des Sinus als Gegenkathete durch Hypotenuse folgt:

$$\Delta Y / (v(t - \Delta t) \cdot \Delta t) = \sin \psi_{real} (t - \Delta t) \approx \psi_{real} (t - \Delta t); \ \psi_{real} \ll 1. \qquad (ii)$$

Im normalen Fahrbetrieb ist der Gierwinkel so klein, dass man den Sinus, wie in Gleichung (ii) schon angedeutet, als linear in $\psi_{real}$ annehmen kann. Gleichung (ii) lässt sich leicht nach $\Delta$Y auflösen, so dass für die Ablage Y zur Zeit t gilt:

$$Y(t) = Y(t - \Delta t) + \psi_{real} (t- \Delta t) \cdot v(t - \Delta t) \cdot \Delta t. \qquad\qquad (iii)$$

Aus dieser Beziehung lässt sich $\psi_{real}$ bestimmen und damit aus dem Vergleich mit dem gemessenen Wert der Offset:

$$\psi_{offset}(t - \Delta t) = \psi_{messung}(t - \Delta t) - \psi_{real}(t - \Delta t). \qquad (iv)$$

Die eben beschriebenen Berechnungsschritte sind mit wenig Aufwand von der Recheneinheit 6 durchführbar. Um auch das statistische Rauschen möglichst herauszumitteln, wird anschließend über mehrere Messungen gemittelt. Auch dies geschieht mit Hilfe der Recheneinheit 6. Da das Fahrverhalten nicht herausgerechnet werden muss, sind weniger Schritte erforderlich. Zusätzlich beschleunigt wird der Kalibrierungsvorgang, da immer die Ablagen aus zwei direkt aufeinander folgend aufgenommenen Bildern der Bildaufnahmeeinrichtung 5 zur Berechnung genutzt werden.

Während der Kalibrierungszeit, also der Bestimmung des Mittelwertes, nimmt die Recheneinheit 6 zusätzlich die Summe der bislang ermittelten Abweichungen $\psi_{offset}$ sowie die Summe der Quadrate der bislang ermittelten Abweichungen $\psi_{offset}^2$ auf. Weiterhin wird ständig die Zahl N der bislang ermittelten Abweichungen $\psi_{offset}$ hochgezählt. Aus diesen Werten, die sehr wenig Speicher belegen, kann auf einfache Art und Weise die Standardabweichung des gemittelten Wertes für $\psi_{offset}$ ermittelt werden. Diese berechnet sich nach Formel (v):

$$\sigma_m = \sqrt{\frac{N \cdot \sum_{1}^{N} \alpha^2 - \left(\sum_{1}^{N} \alpha\right)^2}{N^2 \cdot (N-1)}} \qquad \sqrt{\frac{N \cdot \sum_{1}^{N} \Psi_{offset}^2 - \left(\sum_{1}^{N} \Psi_{offset}\right)^2}{N^2 \cdot (N-1)}} \qquad (v)$$

Die Standardabweichung enthält eine gute Aussage über die Qualität des bisher erhaltenen gemittelten $\psi_{offset}$.

Die Bildaufnahmeeinrichtung 5 umfasst eine Videokamera und eine Infrarotkamera oder ein Nachtsichtgerät. So kann auch unter ungünstigen Beleuchtungsverhältnissen immer eine optimale Bilderfassung gesichert werden.

**Patentansprüche**

1. Verfahren zur Bestimmung einer Abweichung eines gemessenen Gierwinkels von einem realen Gierwinkel anhand der von einer Bildaufnahmeeinrichtung zur Fahrspurerfassung gelieferten Daten in einem Kraftfahrzeug,
**dadurch gekennzeichnet, dass**
eine Recheneinheit aus den Daten zu zwei aufeinander folgenden Zeitpunkten jeweils einen Abstand eines ausgezeichneten Punktes oder einer ausgezeichneten Achse des Kraftfahrzeuges zu einer Fahrbahnbegrenzung und den gemessenen Gierwinkel bestimmt, und
die Recheneinheit aus den Abständen und einer ihr gegebenen Kraftfahrzeuggeschwindigkeitsinformation einen realen Gierwinkel und
die Abweichung aus einer Differenz aus dem gemessenen Gierwinkel und dem realen Gierwinkel bestimmt.

2. Verfahren nach Anspruch 1,
**dadurch gekennzeichnet,**
**dass** eine gemittelte Abweichung aus mehreren zeitlich aufeinander folgend bestimmten Abweichungen ermittelt wird.

3. Verfahren nach Anspruch 2,
**dadurch gekennzeichnet,**
**dass** zusätzlich aus den mehreren zeitlich aufeinander folgend bestimmten Abweichungen die Summe der einzelnen Abweichungen und die Summe der Quadrate der einzelnen Abweichungen sowie die Zahl der mehreren zeitlich aufeinander folgend bestimmten Abweichungen bestimmt werden und daraus die Standardabweichung ermittelt wird.

4. Kraftfahrzeug, umfassend wenigstens ein Fahrerassistenzsystem (7) sowie eine diesem zugeordnete Bildaufnahmeeinrichtung (5) zur Fahrspurerfassung und eine diesem zugeordnete Recheneinheit (6) zur Ermittlung eines Gierwinkels ($\psi$),
**dadurch gekennzeichnet, dass**
durch die Recheneinheit (6) aus den Daten der Bildaufnahmevorrichtung (5) zu zwei aufeinander folgenden Zeit-

punkten (t - $\Delta$t, t) jeweils ein Abstand (Y) eines ausgezeichneten Punktes oder einer ausgezeichneten Achse des Kraftfahrzeuges zu einer Fahrbahnbegrenzung (3, 4) und ein gemessener Gierwinkel ($\psi_{messung}$) bestimmbar sind und durch die Recheneinheit (6) aus den Abständen (Y) und einer ihr gegebenen Kraftfahrzeuggeschwindigkeitsinformation (v) ein realer Gierwinkel ($\psi_{real}$) sowie eine Abweichung ($\psi_{offset}$) des gemessenen Gierwinkels ($\psi_{messung}$) von dem realen Gierwinkel ($\psi_{real}$)aus der Differenz aus dem gemessenen Gierwinkel ($\psi_{messung}$) und dem realen Gierwinkel ($\psi_{real}$) bestimmbar sind.

5. Kraftfahrzeug nach Anspruch 4,
   **dadurch gekennzeichnet,**
   **dass** die Bildaufnahmevorrichtung (5) eine Videokamera und/oder eine Infrarotkamera und/oder ein Nachtsichtgerät umfasst.

FIG. 1

FIG. 2

**Europäisches Patentamt**

**EUROPÄISCHER RECHERCHENBERICHT**

Nummer der Anmeldung

EP 06 00 6089

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | PATENT ABSTRACTS OF JAPAN Bd. 2000, Nr. 26, 1. Juli 2002 (2002-07-01) -& JP 2001 243457 A (NISSAN MOTOR CO LTD), 7. September 2001 (2001-09-07) * das ganze Dokument * ----- | 1-5 | INV. G06T7/00 G01C25/00 |
| A | DE 10 2004 013652 A1 (NISSAN MOTOR CO., LTD) 7. Oktober 2004 (2004-10-07) * Absatz [0018]; Abbildung 1 * ----- | 1,4 | |
| A | DE 101 15 043 A1 (ITERIS, INC; DAIMLERCHRYSLER AG) 4. April 2002 (2002-04-04) * Absatz [0024]; Abbildungen 1,2 * ----- | 1,4 | |

RECHERCHIERTE SACHGEBIETE (IPC)

G06T
G01C

Der vorliegende Recherchenbericht wurde für alle Patentansprüche erstellt

| Recherchenort | Abschlußdatum der Recherche | Prüfer |
|---|---|---|
| München | 29. Juni 2006 | Jakob, C |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 06 00 6089

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

29-06-2006

| Im Recherchenbericht angeführtes Patentdokument | Datum der Veröffentlichung | Mitglied(er) der Patentfamilie | | Datum der Veröffentlichung |
|---|---|---|---|---|
| JP 2001243457 A | 07-09-2001 | KEINE | | |
| DE 102004013652 A1 | 07-10-2004 | JP | 2004287814 A | 14-10-2004 |
|  |  | US | 2004186650 A1 | 23-09-2004 |
| DE 10115043 A1 | 04-04-2002 | KEINE | | |